# EUROPEAN PATENT APPLICATION

(11) **EP 4 819 669 A1**
(43) Date of publication of application: **07.10.2026**
(21) Application number: 24896433.0
(22) Date of filing: 22.11.2024
(51) Int. Cl.: H04W 24/02

(54) **SSB ACTIVATION OR DEACTIVATION METHOD, TERMINAL, AND NETWORK SIDE DEVICE**

(30) Priority: 28.11.2023 CN 202311612468
(71) Applicant: Vivo Mobile Communication Co., Ltd., Dongguan, Guangdong 523863 (CN)
(72) Inventor: LIN, Zhipeng, Dongguan, Guangdong 523863 (CN); LI, Gen, Dongguan, Guangdong 523863 (CN); PAN, Xueming, Dongguan, Guangdong 523863 (CN); QU, Xin, Dongguan, Guangdong 523863 (CN); LI, Jianhui, Dongguan, Guangdong 523863 (CN); JI, Zichao, Dongguan, Guangdong 523863 (CN)
(74) Representative: dompatent
(86) International application number: PCT/CN2024/133813
(87) International publication number: WO 2025/113342

(57) **Abstract**

Embodiments of the present application relate to the technical field of communications. Disclosed are an SSB activation or deactivation method, a terminal, and a network side device. The SSB activation or deactivation method in the embodiments of the present application comprises: a terminal sends a first signal, wherein the first signal is used for activating or deactivating a first SSB.

## Description

### CROSS-REFERENCE TO RELATED APPLICATIONS

This application claims priority to Chinese Patent Application No. 2023116124681, filed with the China National Intellectual Property Administration on November 28, 2023 and entitled "SSB ACTIVATION OR DEACTIVATION METHOD, TERMINAL, AND NETWORK-SIDE DEVICE", which is incorporated herein by reference in its entirety.

### TECHNICAL FIELD

This application pertains to the field of communication technologies, and specifically relates to a synchronization signal and physical broadcast signal or channel block (Synchronization Signal and PBCH block, SSB) activation or deactivation method, a terminal, and a network-side device.

### BACKGROUND

To control transmission complexity of downlink signals such as an SSB and reduce power consumption of a network, the network needs to be configured with flexible SSB resources. Such an SSB is sometimes also referred to as an on demand SSB (on demand SSB).

Such SSB resources need to be activated only when necessary, and a terminal does not need to perform SSB detection on such SSB resources being inactive. In addition, such SSB resources may also be used to assist other uplink transmission, to improve resource utilization.

In a related technology, activation or deactivation of an SSB is determined by a network. In some cases, the network may not learn of a requirement status of a terminal on the SSB in time, and therefore cannot activate or deactivate the SSB in time. As a result, flexibility of transmitting the SSB is poor.

### SUMMARY

Embodiments of this application provide an SSB activation or deactivation method, a terminal, and a network-side device, to resolve a problem of poor flexibility of transmitting an SSB.

According to a first aspect, an SSB activation or deactivation method is provided, and is performed by a terminal. The method includes: The terminal transmits a first signal, where the first signal is used to activate or deactivate a first SSB.

According to a second aspect, an SSB activation or deactivation method is provided, and is performed by a network-side device. The method includes: The network-side device receives a first signal, where the first signal is used to activate or deactivate a first SSB.

According to a third aspect, an SSB activation or deactivation apparatus is provided, including: a transmission module, configured to transmit a first signal, where the first signal is used to activate or deactivate a first SSB.

According to a fourth aspect, an SSB activation or deactivation apparatus is provided, including: a reception module, configured to receive a first signal, where the first signal is used to activate or deactivate a first SSB.

According to a fifth aspect, a terminal is provided. The terminal includes a processor and a memory. The memory stores a program or instructions capable of running on the processor, and the program or the instructions are executed by the processor to implement the steps of the method according to the first aspect.

According to a sixth aspect, a terminal is provided, including a processor and a communication interface. The communication interface is configured to transmit a first signal, and the first signal is used to activate or deactivate a first SSB.

According to a seventh aspect, a network-side device is provided. The network-side device includes a processor and a memory. The memory stores a program or instructions capable of running on the processor, and the program or the instructions are executed by the processor to implement the steps of the method according to the second aspect.

According to an eighth aspect, a network-side device is provided, including a processor and a communication interface. The communication interface is configured to receive a first signal, and the first signal is used to activate or deactivate a first SSB.

According to a ninth aspect, a readable storage medium is provided. The readable storage medium stores a program or instructions, and the program or the instructions are executed by a processor to implement the steps of the method according to the first aspect or the steps of the method according to the second aspect.

According to a tenth aspect, a wireless communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface. The communication interface is coupled to the processor, and the processor is configured to run a program or instructions to implement the steps of the method according to the first aspect or the steps of the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

In embodiments of this application, a terminal transmits a first signal, and the first signal is used to activate or deactivate a first SSB. Therefore, the terminal may transmit a signal used to activate an SSB in a case that the SSB is needed, and transmit a signal used to deactivate the SSB in a case that the SSB is not needed, thereby improving flexibility of transmitting the SSB and helping improve resource utilization.

### BRIEF DESCRIPTION OF DRAWINGS

FIG. 1 is a schematic diagram of a wireless communication system according to an embodiment of this application;
FIG. 2 is a schematic flowchart of an SSB activation or deactivation method according to an embodiment of this application;
FIG. 3 is a schematic flowchart of an SSB activation or deactivation method according to an embodiment of this application;
FIG. 4 is a schematic diagram of a structure of an SSB activation or deactivation apparatus according to an embodiment of this application;
FIG. 5 is a schematic diagram of a structure of an SSB activation or deactivation apparatus according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network-side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in an order other than that illustrated or described herein. Moreover, the terms "first" and "second" typically distinguish between objects of one category rather than limiting a number of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6^{th} generation (6^{th} Generation, 6G) communication system other than the NR system.

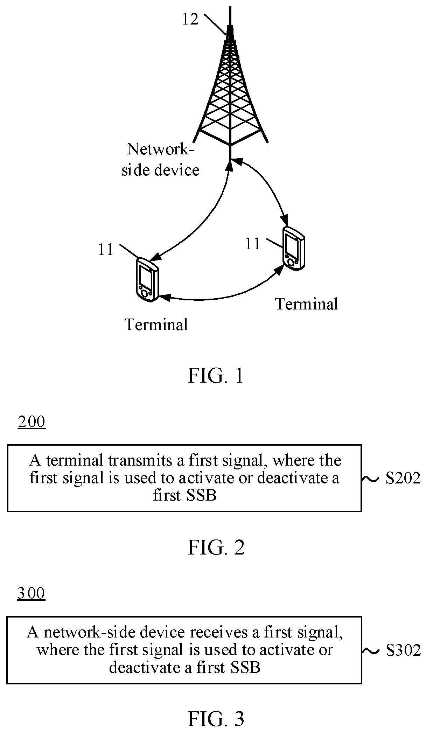

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes: a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another proper term in the art. The base station is not limited to a specific technical term, provided that same technical effects are achieved. It should be noted that in the embodiments of this application, only a base station in an NR system is used as an example for description, and a specific type of the base station is not limited.

With reference to accompanying drawings, the following describes in detail an SSB activation or deactivation method provided in embodiments of this application by using some embodiments and application scenarios thereof.

As shown in FIG. 2, an embodiment of this application provides an SSB activation or deactivation method 200. The method may be performed by a terminal. In other words, the method may be performed by software or hardware installed in the terminal. The method includes the following step:

S202: The terminal transmits a first signal, where the first signal is used to activate or deactivate a first SSB.

Activating or deactivating the first SSB mentioned in embodiments of this application may indicate activating or deactivating the first SSB by a network, or may indicate requesting a network to activate or deactivate the first SSB. The first signal may be a signal used to activate or deactivate the first SSB, or may be a signal used to request to activate or deactivate the first SSB.

The first SSB mentioned in embodiments of this application may be an on demand SSB (On demand SSB). The first SSB may be a module including at least one of a synchronization signal, a broadcast signal, a broadcast channel, another system message, a downlink broadcast channel, a positioning reference signal, a time-frequency tracking reference signal, a low-power wakeup signal, a channel state information reference signal, a downlink control channel, or a downlink control channel resource.

The first SSB mentioned in embodiments of this application may be any SSB that may be activated, deactivated, or sent by a switch. Activating the first SSB may be activating some SSB indexes (index) on the SSB, or may be activating all SSB indexes. Deactivating the first SSB may be deactivating some SSB indexes (index) on the SSB, or may be deactivating all SSB indexes.

Activating the first SSB mentioned in embodiments of this application may be allowing the terminal to detect the first SSB on a first SSB resource, or allowing the network to transmit the first SSB on the first SSB resource. Deactivating the first SSB may be disallowing the terminal to detect the first SSB on the first SSB resource, or disallowing the network to transmit the first SSB on the first SSB resource.

According to the SSB activation or deactivation method provided in this embodiment of this application, the terminal transmits the first signal, where the first signal is used to activate or deactivate the first SSB. Therefore, the terminal may transmit a signal used to activate an SSB in a case that the SSB is needed, and transmit a signal used to deactivate the SSB in a case that the SSB is not needed, thereby improving flexibility of transmitting the SSB and helping improve resource utilization.

The SSB activation or deactivation method provided in this embodiment of this application may also be used to activate or deactivate a time-frequency resource, a demodulation reference signal (Demodulation Reference Signal, DMRS) resource, or a sequence used for transmission of another signal.

The following separately describes the following content in a plurality of embodiments: (1) a method for transmitting and retransmitting a first signal, including a retransmission mechanism and a feedback mechanism of the first signal; (2) resource selection and switching mechanisms of a first SSB and a second SSB, including a rule of selection between two types of SSBs; (3) effective time of activation or deactivation of the first SSB; (4) a condition for transmitting the first signal; and (5) a method for distinguishing whether the first signal is an activation signal or a deactivation signal. It may be understood that the embodiments formed by the foregoing plurality of methods may be implemented in combination, or may be independently implemented.

For the first signal, to improve reliability of activating or deactivating the first SSB, a retransmission mechanism of the first signal may be introduced. In some embodiments, the first signal supports repetition transmission, or the first signal supports retransmission.

In some embodiments, the first signal supports repetition transmission, and a condition for repetition transmission of the first signal by the terminal includes at least one of the following:
(1) A number of transmissions of the first signal does not reach a maximum number of repetitions.

In this example, the maximum number of transmissions of the first signal is introduced. When the number of transmissions of the first signal does not reach the maximum number of transmissions, the first signal may be repeatedly transmitted. When the number of transmissions of the first signal reaches the maximum number of repetitions, it is announced that activation or deactivation of the first SSB fails. The terminal monitors (monitor) only the second SSB, and the second SSB may be a normal SSB (normal SSB).

The second SSB mentioned in embodiments of this application may be a normal SSB (normal SSB). The second SSB may be a module including at least one of a synchronization signal, a broadcast signal, a broadcast channel, another system message, a downlink broadcast channel, a positioning reference signal, a time-frequency tracking reference signal, a low-power wakeup signal, a channel state information reference signal, a downlink control channel, or a downlink control channel resource.

(2) A transmission time of the first signal is in a transmission time window or during running of a timer, where the transmission time window and the timer are used to transmit the first signal.

In this example, the transmission time window or timer (timer) of the first signal is introduced. If a current moment is in the transmission time window or during running of the timer, the first signal may be repeatedly transmitted. On the contrary, if the current moment is not in the transmission time window or the timer expires or is not running, the first signal is no longer transmitted.

A start moment of the transmission time window may be related to an initial transmission time of the first signal. For example, the start moment of the transmission time window may be the initial transmission time of the first signal, and duration of the transmission time window may be configured or predefined by a network. A start moment of the timer may be related to the initial transmission time of the first signal. For example, when the first signal is initially transmitted, the terminal starts the timer, and duration of the timer may be configured or predefined by the network.

(3) A measurement quantity of the first SSB is less than or not greater than a first threshold, where the first signal is used to activate the first SSB. The measurement quantity of the first SSB may be a reference signal receiving power (Reference Signal Receiving Power, RSRP), reference signal receiving quality (Reference Signal Receiving Quality, RSRQ), or the like of the first SSB, or may be a function value obtained based on the RSRP or the RSRQ of the first SSB.

(4) A measurement quantity of the first SSB is greater than or not less than a first threshold, where the first signal is used to deactivate the first SSB. The measurement quantity of the first SSB may be an RSRP, RSRQ, or the like of the first SSB, or may be a function value obtained based on the RSRP or the RSRQ of the first SSB.

(5) The terminal does not receive a feedback signal in a reception time window of the feedback signal, where the feedback signal is configured to indicate whether the first signal is successfully received.

In some embodiments, the terminal does not receive the feedback signal in the reception time window of the feedback signal, and the terminal may repeatedly transmit the first signal.

In some embodiments, the terminal does not receive the feedback signal in the reception time window of the feedback signal, and the terminal may repeatedly transmit the first signal in specific time after the reception time window ends. The specific time here may be configured by the network or specified in a protocol.

Optionally, a start position of the reception time window is configured or predefined by the network. For example, the start position of the reception time window is first time at which a downlink feedback signal can be received after the first signal is transmitted.

Optionally, a length of the reception time window is related to at least one of the following: (1) a length of a random access response (Random Access Response, RAR) time window (window), for example, may be a length of a RAR time window, or a function value obtained based on the length of the RAR time window, for example, an integer multiple of the length of the RAR time window; and (2) a period of the first SSB, for example, may be a length of the period of the first SSB, or a function value obtained based on the length of the period of the first SSB, for example, an integer multiple of the length of the period of the first SSB.

In the foregoing several embodiments, the feedback signal and a reception window of the feedback signal are introduced. Introducing the feedback signal helps the terminal learn of whether the first signal is successfully transmitted, to improve robustness of transmitting the first signal. Introducing the reception window of the feedback signal helps improve reception efficiency of the feedback signal.

Optionally, in the foregoing embodiments, the first signal is associated with the feedback signal (correspondence), and the feedback signal is configured to indicate whether the first signal is successfully received; or the first signal is associated with a beam of the first SSB (correspondence); or beams used for transmitting the first signal a plurality of times are the same or different.

Optionally, beams used for transmitting the first signal a plurality of times are different. Therefore, after receiving the repeatedly transmitted first signal, the network-side device (for example, a base station) may determine a transmit beam of the first SSB. The base station may select a proper transmit beam (of the first SSB) through measurement from different transmit beams of the first signal.

Optionally, beams used for transmitting the first signal a plurality of times are the same. This example may be used in a case of weak coverage to improve reliability of transmitting the first signal. In this example, execution may be triggered based on a situation such as RSRP strength of an uplink signal.

In the foregoing plurality of embodiments, the feedback signal of the first signal is mentioned, so that the terminal learns of whether the first signal is successfully transmitted. Optionally, after the terminal transmits the first signal, the method further includes: The terminal receives a feedback signal, where the feedback signal is configured to indicate whether the first signal is successfully received; and the feedback signal includes at least one of the following:
(1) Specific SSB

For example, a specific bit (bit), such as an intra-freq re-selection indication (Intra-freq re-selection indication) bit, may be used in a master information block (Master Information Block, MIB) of the SSB to indicate whether the first signal is successfully received by the network.

For another example, the feedback signal of the first signal is the first SSB. That is, the terminal determines, based on whether the first SSB can be detected or based on a signal capability or quality of the detected first SSB, whether the first SSB is activated.

### (2) Response message of the first signal

In this example, a corresponding radio network temporary identity (Radio Network Temporary Identity, RNTI) identification response message may be introduced. The response message may indicate whether the first signal is successfully received.

### (3) Physical layer signaling

For example, after the first signal is received by the network, the network may indicate, by using physical downlink control channel (Physical Downlink Control Channel, PDCCH) signaling (order), the terminal to use the first SSB for various corresponding uses, such as cell measurement or downlink beam management, or select, based on the first SSB, a corresponding physical random access channel (Physical Random Access Channel, PRACH) resource for PRACH transmission.

For another example, after the first signal is received by the network, the network may indicate, by using PDCCH signaling, the terminal to use only the first SSB for various corresponding uses, such as cell measurement or downlink beam management, or select, based on the first SSB, a corresponding PRACH resource for PRACH transmission.

For another example, the network may use special PDCCH signaling, for example, configure a preamble identifier (preamble id) of the PDCCH signaling as a special value, to notify the terminal and the network that the first signal is received.

For example, the network may notify the terminal, by using a specific common (common) PDCCH, such as a specific downlink control information (Downlink Control Information, DCI) format (format) or paging (paging) DCI, whether the first signal is successfully received.

In the foregoing embodiment, a proper retransmission mechanism is introduced to the first signal to improve robustness of the first signal, thereby reducing a delay to a specific extend. In addition, it is further considered whether the network needs to indicate the feedback signal to the terminal, to notify the terminal whether activation or deactivation succeeds.

The foregoing embodiments describe transmission and retransmission mechanisms of the first signal. The following describes selection and switching mechanisms of a first SSB and a second SSB. The first SSB may be an on demand SSB (On demand SSB), and the second SSB may be a normal SSB (normal SSB).

In a case that a resource of the first SSB and a resource of the second SSB are configured independently, or a resource of the first SSB and a resource of the second SSB are configured by a common SSB resource, but are frequency division multiplexing (Frequency Division Multiplexing, FDM) or at a far distance, when the first SSB is activated, measurement and reception of the SSB need to be considered. For example, when measurement and reception are selected to be performed on the first SSB resource, and when measurement and reception are selected to be performed on the second SSB resource. In the following embodiments, it may be ensured that a terminal selects a proper SSB as far as possible, thereby improving a success probability of successfully receiving the SSB and improving a success probability of a correspondence such as optimal beam selection and random access process.

Optionally, the method provided in the foregoing embodiments further includes at least one of the following steps:
(1) The terminal preferentially selects the first SSB in a case that the first SSB is activated or takes effect.

In some embodiments, when the first SSB is activated or takes effect, the terminal preferentially selects the first SSB. For example, the first SSB is selected for PRACH resource selection or for determining a downlink beam.

(2) The terminal preferentially selects the first SSB in a first time range.

In some embodiments, the terminal preferentially selects the first SSB in the first time range. For example, the first SSB is selected for PRACH resource selection or for determining a downlink beam.

The first time range may be configured or predefined by a network; or the first time range includes a PRACH configuration period or an SSB period. For example, in a PRACH configuration period or an SSB period, the network preferentially selects the first SSB for PRACH resource selection and performs PRACH transmission. When the terminal fails to receive a RAR and enters a next time period, the terminal preferentially selects the second SSB for subsequent PRACH resource selection.

(3) The terminal preferentially selects the second SSB for PRACH resource selection during initial PRACH transmission, where the second SSB includes a normal SSB.

In some embodiments, the terminal preferentially selects the second SSB for corresponding PRACH resource selection during initial PRACH transmission.

The initial PRACH transmission includes at least one of the following: first PRACH transmission without power ramping (power ramping); first PRACH transmission without repeated transmission; and first PRACH transmission in a plurality of times of repeated transmission.

(4) The terminal determines, based on a measurement quantity of a reference signal associated with the first SSB, whether to preferentially select the first SSB.

In some embodiments, whether the terminal preferentially selects the first SSB depends on the measurement quantity of the reference signal associated with the first SSB by the terminal.

For example, when an SS-RSRP measured by a reference signal (such as an SSB) associated with the first SSB is not less than an SS-RSRP measured by a reference signal associated with the second SSB, the first SSB is selected for determining a PRACH resource.

For another example, when an SS-RSRP measured by a reference signal (such as an SSB) associated with the first SSB is not less than or greater than a threshold for at least one SSB index, the first SSB is selected for selecting a PRACH resource.

The reference signal associated with the first SSB mentioned in embodiments of this application may be an SSB, a channel state information-reference signal (Channel State Information-Reference Signal, CSI-RS), a tracking reference signal (Tracking Reference Signal, TRS), a message A (MsgA), a MsgA physical uplink shared channel (Physical Uplink Shared Channel, PUSCH), a physical random access channel (Physical Random Access Channel, PRACH), and a configuration grant physical uplink shared channel (Configuration Grant Physical Uplink Shared Channel, CG PUSCH). The reference signal may include a reference signal of one cell or a reference signal of a plurality of cells. The plurality of cells may be a same frequency carrier (frequency carrier) or different frequency carriers, or may be in a bandwidth (band) or in different bandwidths, and the different bandwidths may be continuous or discontinuous.

Optionally, in the foregoing embodiments, switching from the first SSB to the second SSB may be further supported, or switching from the second SSB to the first SSB is supported.

Optionally, the method provided in the foregoing embodiments further includes at least one of the following:
(1) If a number of failures of PRACH transmission by the terminal on a PRACH resource associated with a first type of SSB is greater than or not less than a second threshold, the terminal switches to select a second type of SSB for PRACH resource selection.
(2) If a measurement quantity of a reference signal associated with a first type of SSB does not satisfy a first condition, the terminal switches to select a second type of SSB.
   In this example, the measurement quantity of the reference signal may be an RSRP, RSRQ, or the like of the reference signal, or may be a function value obtained based on the RSRP or the RSRQ of the reference signal.
(3) If a measurement quantity of a first type of SSB does not satisfy a second condition, the terminal switches to select a second type of SSB.

In this example, the measurement quantity of the first type of SSB may be an RSRP, RSRQ, or the like of the first type of SSB, or may be a function value obtained based on the RSRP or the RSRQ of the first type of SSB.

Optionally, that the measurement quantity of the first SSB does not satisfy the second condition includes at least one of the following: signal strength, signal quality, a signal strength function value, and a signal quality function value of the first type of SSB does not satisfy the second condition.

(4) If a number of transmissions by the terminal on a PRACH resource associated with a first type of SSB reaches a third threshold, the terminal switches to select a second type of SSB.

The third threshold may be a maximum number of allowed transmissions, or may be a specified value that is less than the maximum number of transmissions.

(5) If PRACH transmission attempted by the terminal is always on a PRACH resource associated with a first type of SSB, the terminal switches to select a second type of SSB.

In this example, the terminal is not allowed to switch back to a previously selected SSB type.

(6) If a number of retransmissions of the first signal is greater than or not less than a fourth threshold, the terminal switches to select a second type of SSB, where the first signal is used to activate the first SSB.

In this example, if a number of retransmissions of an activation signal of the first SSB is greater than or not less than a fourth threshold, the terminal switches to select the second SSB. For example, a PRACH resource corresponding to the second SSB is switched for PRACH transmission.

In the foregoing embodiments, the first type of SSB is the first SSB, and the second type of SSB is the second SSB; or the first type of SSB is the second SSB, and the second type of SSB is the first SSB. The second SSB includes a normal SSB.

To ensure consistent understanding of effective time of the first SSB by the terminal and the network, and avoid blindly transmitting and receiving the first SSB or blindly transmitting and receiving a PRACH signal on a corresponding PRACH resource of the first SSB, the effective time of the first SSB may be determined by using the following solution in this embodiment.

Optionally, in the foregoing embodiments, the first signal is used to activate the first SSB, and the method further includes the following steps: The terminal selects the first SSB on at least one of the following occasions:
(1) after the terminal transmits the first signal;
(2) after a first time interval after the terminal transmits the first signal, where the first time interval may be configured by a network or specified in a protocol, for example, may be determined based on uplink signal processing time;
(3) after the terminal receives the feedback signal, where optionally, the feedback signal is configured to indicate that the first signal is successfully received; and
(4) after a second time interval after the terminal receives the feedback signal, where optionally, the feedback signal is configured to indicate that the first signal is successfully received, and the second time interval may be configured by a network or specified in a protocol, for example, may be determined based on uplink signal processing time and downlink signal receiving and processing time.

Optionally, in parallel with the previous embodiment, the first signal is used to deactivate the first SSB, and the method further includes the following steps: The terminal selects the first SSB on at least one of the following occasions:
(1) before the terminal transmits the first signal;
(2) before a first time point, where the first time point is after a third time interval after the terminal transmits the first signal, where the third time interval may be configured by a network or specified in a protocol, for example, may be determined based on uplink signal processing time;
(3) before the terminal receives the feedback signal, where optionally, the feedback signal is configured to indicate that the first signal is successfully received; and
(4) before a second time point, where the second time point is after a fourth time interval after the terminal receives the feedback signal, where optionally, the feedback signal is configured to indicate that the first signal is successfully received, and the fourth time interval may be configured by a network or specified in a protocol, for example, may be determined based on uplink signal processing time and downlink signal receiving and processing time.

Optionally, in parallel with the foregoing two embodiments, the method further includes: The terminal determines effective time of activating or deactivating the first SSB based on at least one of the following: a resource occupied by the first signal, and indication information carried in the first signal. In this example, the effective time of activating or deactivating the first SSB may be determined based on the resource occupied by the first signal or the indication information carried in the first signal.

To activate or request to activate the first SSB only when necessary, the solution provided in the following embodiment may define a condition for transmitting the first signal.

Optionally, in the foregoing embodiments, when the first signal is used to activate the first SSB, a transmission occasion of the first signal includes at least one of the following:
(1) A number of random accesses by the terminal on a PRACH associated with the second SSB or a number of random access response message reception failures reaches a fifth threshold.
(2) Signal strength or quality of the second SSB does not satisfy a third condition.

For example, signal strength, signal quality, a signal strength function value, or a signal quality function value of the second SSB does not satisfy the third condition.

For example, an SS-RSRP measured by the second SSB is less than one threshold (that is, the third condition cannot be satisfied). In this case, the first signal may be transmitted to activate or request to activate the first SSB.

(3) A number of transmission attempts by the terminal on a PRACH resource associated with the second SSB reaches a sixth threshold, and transmission fails.

The sixth threshold may be a maximum number of allowed transmissions, or may be a specified value that is less than the maximum number of transmissions.

(4) The terminal attempts a two-step random access on a PRACH resource associated with the second SSB, and still fails to access after falling back to a four-step random access.

(5) A number of transmissions of the first signal is less than or not greater than a seventh threshold. The seventh threshold may be a configured or predefined value.

(6) A timing advance (Timing Advance, TA) for transmitting the first signal is valid.

(7) The first signal is repeatedly transmitted, and a time interval from last transmission is greater than or not less than an eighth threshold.

(8) A power of a PRACH signal transmitted by the terminal on a PRACH resource associated with the second SSB is greater than or not less than a ninth threshold. The ninth threshold may be a maximum transmit power.

(9) An identifier of a preamble in a RAR message received by the terminal is different from an identifier of a preamble sent by the terminal on a PRACH resource associated with the second SSB.

(10) An identifier of a preamble in a RAR message received by the terminal is different from an identifier of a preamble sent by the terminal on a PRACH resource associated with the second SSB, and a number of receptions of the RAR message in a second time range is greater than or not less than a tenth threshold.

The second time range may be a length of one RAR time window, or a length of a plurality of RAR time window, or a window additionally configured by the network, or a window (such as 10 ms) specified in an additional protocol.

The tenth threshold may be configured by the network or specified in the protocol, or may be related to a number of RACH occasions (RACH Occasion, RO) associated with the second SSB or a number of configured preambles (preamble). For example, the tenth threshold is obtained by dividing a total number of preambles configured on an RO associated with the second SSB by a number of ROs associated with the second SSB, and rounding down.

(11) The terminal has transmitted a second signal, where the second signal is used to activate a signal associated with the first SSB.

In this example, the second signal may be an activation signal used to activate another specific signal. The specific signal herein may be a paging, a physical downlink shared channel (Physical Downlink Shared Channel, PDSCH), a PDCCH, a PRS, a TRS, a PRACH, a PUCCH, a PUSCH, a CSI-RS, a PTRS, a MsgA, or the like.

For example, when the terminal transmits an uplink wake-up signal used to activate a flexible (flexible) RO, the terminal may transmit an uplink activation signal used to activate the first SSB.

(12) The terminal detects an on demand signal.

The on demand signal herein includes but is not limited to an SSB, a paging, a PDSCH, a PDCCH, a PRS, a TRS, a PUSCH, or the like.

For example, when an on demand PDCCH is detected, the network does not need to save energy, and the correspondingly first SSB may be activated.

(13) A time interval between a transmission time of a deactivation signal used to deactivate the first SSB and a current moment is greater than or not less than an eleventh threshold.

(14) Duration from a moment at which activation of the first SSB starts to take effect reaches a twelfth threshold.

For example, the first SSB is considered to be activated and effective within a period of time in which the activation of the first SSB takes effect, and is deactivated by default after this period of time, and an initial transmitted activation signal may be continued to be transmitted.

(15) Signal strength, signal quality, a signal strength function value, or a signal quality function value of a reference signal associated with the second SSB does not satisfy a specific requirement. Specifically, for example, when SS-RSRPs measured by all reference signals associated with the second SSB are less than one threshold, an activation signal may be transmitted to activate or request to activate the first SSB.

In the foregoing embodiments, the second SSB includes a normal SSB.

In the foregoing plurality of embodiments, transmission of the first signal takes an actual network energy saving status, cell coverage, a capacity, and a conflict status into consideration, and it is proposed that transmission of the first signal needs to be promoted under a specific condition.

In the foregoing plurality of embodiments, a resource selection priority problem between the first SSB and the second SSB is considered based on an actual system coverage status, a collision status, and a network energy consumption status, to further improve utilization efficiency of an air interface resource, including energy utilization efficiency of the network and the terminal.

Optionally, in parallel with the previous embodiment, when the first signal is used to deactivate the first SSB, a transmission occasion of the first signal includes at least one of the following:
(1) A number of random accesses by the terminal on a PRACH associated with the second SSB or a number of random access response message reception failures does not reach a fifth threshold.
(2) Signal strength or quality of the second SSB satisfies a third condition.
   For example, signal strength, signal quality, a signal strength function value, or a signal quality function value of the second SSB satisfies the third condition.
(3) A number of transmission attempts by the terminal on a PRACH resource associated with the second SSB does not reach a sixth threshold. The sixth threshold may be a maximum number of allowed transmissions, or may be a specified value that is less than the maximum number of transmissions.
(4) The terminal attempts a two-step random access, and does not fall back to a four-step random access.
(5) A number of transmissions of the first signal is less than or not greater than a seventh threshold. The seventh threshold may be a configured or predefined value.
(6) A TA for transmitting the first signal is valid.
(7) The first signal is retransmitted, and a time interval from last transmission is greater than or not less than an eighth threshold.
(8) A power of a PRACH signal transmitted by the terminal on a PRACH resource associated with the second SSB is less than or not greater than a ninth threshold. The ninth threshold may be a maximum transmit power.
(9) An identifier of a preamble in a RAR message received by the terminal is the same as an identifier of a preamble sent by the terminal on a PRACH resource associated with the second SSB, that is, the RAR message is successfully received.
(10) An identifier of a preamble in a RAR message received by the terminal is different from an identifier of a preamble sent by the terminal on a PRACH resource associated with the second SSB, and a number of receptions of the RAR message in a second time range is less than or not greater than a tenth threshold.

The second time range may be a length of one RAR time window, or a length of a plurality of RAR time window, or a window additionally configured by the network, or a window (such as 10 ms) specified in an additional protocol.

The tenth threshold may be configured by the network or specified in the protocol, or may be related to a number of RACH occasions (RACH Occasion, RO) associated with the second SSB or a number of configured preambles (preamble). For example, the tenth threshold is obtained by dividing a total number of preambles configured on an RO associated with the second SSB by a number of ROs associated with the second SSB, and rounding down.

(11) The terminal does not transmit a third signal or a condition for transmitting a third signal is not satisfied, where the third signal is used to activate an on demand signal associated with the first SSB.

For example, the terminal does not have or does not satisfy a condition for prompting transmission of another signal to activate an on demand signal or the terminal satisfies a condition for deactivating an on demand signal.

The on demand signal herein may be an SSB, a paging, a PDSCH, a PDCCH, a PRS, a TRS, or the like. For example, when the terminal does not transmit an uplink wake-up signal used to activate an on demand PDCCH, the terminal may transmit an uplink deactivation signal used to deactivate the first SSB. For example, when the terminal transmits an uplink wake-up signal used to deactivate the first SSB, the terminal may also transmit an uplink deactivation signal used to deactivate a flexible RO.

(12) A condition for deactivating an on demand signal is satisfied.

(13) The terminal does not detect an on demand signal.

The on demand signal includes but is not limited to an SSB, a paging, a PDSCH, a PDCCH, a PRS, a TRS, or the like.

For example, when an on demand PDCCH is not detected, the network needs to save energy, and the correspondingly first SSB may be deactivated.

(14) A time interval between a transmission time of an activation signal used to activate the first SSB and a current moment is greater than or not less than an eleventh threshold.

(15) Signal strength, signal quality, a signal strength function value, or a signal quality function value of a reference signal associated with the second SSB satisfies a specific requirement. Specifically, for example, when at least a part of SS-RSRPs measured by all reference signals associated with the second SSB is not less than one threshold, a deactivation signal may be transmitted to deactivate or request to deactivate the first SSB.

In the foregoing embodiments, the second SSB includes a normal SSB.

In the foregoing plurality of embodiments, transmission of the first signal takes an actual network energy saving status, cell coverage, a capacity, and a conflict status into consideration, and it is proposed that transmission of the first signal needs to be promoted under a specific condition.

In the foregoing plurality of embodiments, a resource selection priority problem between the first SSB and the second SSB is considered based on an actual system coverage status, a collision status, and a network energy consumption status, to further improve utilization efficiency of an air interface resource, including energy utilization efficiency of the network and the terminal.

To determine whether the first signal is not activated or is a deactivation signal, the two signals need to be distinguished. Optionally, in the foregoing embodiments, the first signal includes an activation signal or a deactivation signal, the activation signal is used to activate the first SSB, the deactivation signal is used to deactivate the first SSB, and the activation signal and the deactivation signal are distinguished by using at least one of the following:
(1) different time resources in a same signal configuration;
(2) different frequency domain resources in a same signal configuration;
(3) different space resources in a same signal configuration, where for example, a same signal associated with two different reference signal indexes may be separately used for activation or deactivation;
(4) different signal sequences in a same signal configuration; and
(5) different signal configurations.

To determine whether the first signal is an activation signal or a deactivation signal, a plurality of signal differentiation methods are provided in this embodiment. In this implementation, the activation signal and the deactivation signal may share some configurations, to reduce signal design complexity.

Optionally, an association between the reference signal and the first signal or a first signal resource mentioned in the foregoing embodiments includes but is not limited to: an association between the SSB and an activation signal resource, a relationship between the CSI-RS and the activation signal resource, a relationship between the TRS and the activation signal resource, an association between a PRACH resource and the activation signal resource, an association between a MsgA resource and the activation signal resource, an association between a MsgA PUSCH resource and the activation signal resource, or an association between a CG PUSCH and the activation signal resource.

The SSB activation or deactivation method according to this embodiment of this application is described in detail with reference to FIG. 2. The following describes in detail an SSB activation or deactivation method according to another embodiment of this application with reference to FIG. 3. It may be understood that interaction between the network-side device and the terminal described from the network-side device is the same as or corresponds to the description on the terminal side in the method shown in FIG. 2. To avoid repetition, related descriptions are appropriately omitted.

FIG. 3 is a schematic flowchart of implementing an SSB activation or deactivation method according to an embodiment of this application. The method may be applied to a network-side device. As shown in FIG. 3, the method 300 includes the following steps.

S302: The network-side device receives a first signal, where the first signal is used to activate or deactivate a first SSB.

In this embodiment of this application, the network-side device receives the first signal, and the first signal is used to activate or deactivate the first SSB. In this embodiment of this application, a terminal may transmit a signal used to activate an SSB in a case that the SSB is needed, and transmit a signal used to deactivate the SSB in a case that the SSB is not needed, thereby improving flexibility of transmitting the SSB and helping improve resource utilization.

Optionally, in an embodiment, the first signal supports repetition reception, and a condition for repetition reception of the first signal by the network-side device includes at least one of the following: (1) a number of receptions of the first signal does not reach a maximum number of repetitions; (2) a reception time of the first signal is in a reception time window or during running of a timer, where the reception time window and the timer are used to receive the first signal; and (3) the network-side device does not transmit a feedback signal in a transmission time window of the feedback signal, where the feedback signal is configured to indicate whether the first signal is successfully received.

Optionally, in an embodiment, the first signal is associated with the feedback signal, and the feedback signal is configured to indicate whether the first signal is successfully received; or the first signal is associated with a beam of the first SSB; or beams used for transmitting the first signal a plurality of times are the same or different.

Optionally, in an embodiment, after the network-side device receives the first signal, the method further includes: The network-side device transmits a feedback signal, where the feedback signal is configured to indicate whether the first signal is successfully received. The feedback signal includes at least one of the following: a specific SSB, a response message of the first signal, or physical layer signaling.

Optionally, in an embodiment, the first signal includes an activation signal or a deactivation signal, the activation signal is used to activate the first SSB, the deactivation signal is used to deactivate the first SSB, and the activation signal and the deactivation signal are distinguished by using at least one of the following: (1) different time resources in a same signal configuration; (2) different frequency domain resources in a same signal configuration; (3) different space resources in a same signal configuration; (4) different signal sequences in a same signal configuration; and (5) different signal configurations.

The SSB activation or deactivation method provided in this embodiment of this application may be performed by an SSB activation or deactivation apparatus. In embodiments of this application, an example in which the SSB activation or deactivation apparatus performs the SSB activation or deactivation method is used to describe the SSB activation or deactivation apparatus provided in embodiments of this application.

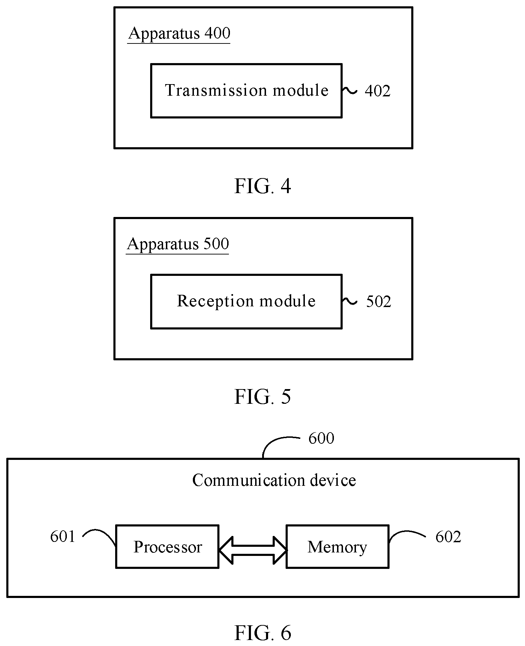

FIG. 4 is a schematic diagram of a structure of an SSB activation or deactivation apparatus according to an embodiment of this application. The apparatus may correspond to the terminal in other embodiments. As shown in FIG. 4, the apparatus 400 includes the following module:
a transmission module 402, configured to transmit a first signal, where the first signal is used to activate or deactivate a first SSB.

Optionally, the apparatus 400 further includes a reception module, a processing module, and the like.

In this embodiment of this application, the transmission module transmits the first signal, and the first signal is used to activate or deactivate the first SSB. Therefore, the apparatus 400 may transmit a signal used to activate an SSB in a case that the SSB is needed, and transmit a signal used to deactivate the SSB in a case that the SSB is not needed, thereby improving flexibility of transmitting the SSB and helping improve resource utilization.

Optionally, in an embodiment, the first signal supports repetition transmission, and a condition for repetition transmission of the first signal by the transmission module 402 includes at least one of the following: (1) a number of transmissions of the first signal does not reach a maximum number of repetitions; (2) a transmission time of the first signal is in a transmission time window or during running of a timer, where the transmission time window and the timer are used to transmit the first signal; (3) a measurement quantity of the first SSB is less than or not greater than a first threshold, where the first signal is used to activate the first SSB; (4) a measurement quantity of the first SSB is greater than or not less than a first threshold, where the first signal is used to deactivate the first SSB; and (5) the apparatus does not receive a feedback signal in a reception time window of the feedback signal, where the feedback signal is configured to indicate whether the first signal is successfully received.

Optionally, in an embodiment, a start position of the reception time window is configured or predefined by the network; or a length of the reception time window is related to at least one of the following: a length of a RAR time window; and a period of the first SSB.

Optionally, in an embodiment, the first signal is associated with the feedback signal, and the feedback signal is configured to indicate whether the first signal is successfully received; or the first signal is associated with a beam of the first SSB; or beams used for transmitting the first signal a plurality of times are the same or different.

Optionally, in an embodiment, the apparatus 400 further includes a reception module, configured to receive a feedback signal, where the feedback signal is configured to indicate whether the first signal is successfully received. The feedback signal includes at least one of the following: a specific SSB, a response message of the first signal, and physical layer signaling.

Optionally, in an embodiment, the transmission module 402 is configured to perform at least one of the following: (1) preferentially selecting the first SSB in a case that the first SSB is activated or takes effect; (2) preferentially selecting the first SSB in a first time range; (3) preferentially selecting a second SSB for PRACH resource selection during initial PRACH transmission, where the second SSB includes a normal SSB; and (4) determining, based on a measurement quantity of a reference signal associated with the first SSB, whether to preferentially select the first SSB.

Optionally, in an embodiment, the first time range is configured or predefined by a network; or the first time range includes a PRACH configuration period or an SSB period.

Optionally, in an embodiment, the initial PRACH transmission includes at least one of the following: (1) first PRACH transmission without power ramping; (2) first PRACH transmission without repeated transmission; and (3) first PRACH transmission in a plurality of times of repeated transmission.

Optionally, in an embodiment, the transmission module 402 is configured to perform at least one of the following: (1) if a number of failures of PRACH transmission on a PRACH resource associated with a first type of SSB is greater than or not less than a second threshold, switching to select a second type of SSB for PRACH resource selection; (2) if a measurement quantity of a reference signal associated with a first type of SSB does not satisfy a first condition, switching to select a second type of SSB; (3) if a measurement quantity of a first type of SSB does not satisfy a second condition, switching to select a second type of SSB; (4) if a number of transmissions on a PRACH resource associated with a first type of SSB reaches a third threshold, switching to select a second type of SSB; (5) if attempted PRACH transmission is always on a PRACH resource associated with a first type of SSB, switching to select a second type of SSB; and (6) if a number of retransmissions of the first signal is greater than or not less than a fourth threshold, switching to select a second type of SSB, where the first signal is used to activate the first SSB, where the first type of SSB is the first SSB, and the second type of SSB is the second SSB; or the first type of SSB is the second SSB, and the second type of SSB is the first SSB; and the second SSB includes the normal SSB.

Optionally, in an embodiment, that the measurement quantity of the first SSB does not satisfy the second condition includes at least one of the following: signal strength, signal quality, a signal strength function value, and a signal quality function value of the first type of SSB does not satisfy the second condition.

Optionally, in an embodiment, the first signal is used to activate the first SSB, and the transmission module 402 is configured to select the first SSB on at least one of the following occasions: after the first signal is transmitted; after a first time interval after the first signal is transmitted; after the feedback signal is received; and after a second time interval after the feedback signal is received.

Optionally, in an embodiment, the first signal is used to deactivate the first SSB, and the transmission module 402 is configured to select the first SSB on at least one of the following occasions: before the first signal is transmitted; before a first time point, where the first time point is after a third time interval after the first signal is transmitted; before the feedback signal is received; and before a second time point, where the second time point is after a fourth time interval after the feedback signal is received.

Optionally, in an embodiment, the feedback signal is configured to indicate that the first signal is successfully received.

Optionally, in an embodiment, the transmission module 402 is configured to determine effective time of activating or deactivating the first SSB based on at least one of the following: a resource occupied by the first signal, and indication information carried in the first signal.

Optionally, in an embodiment, in a case that the first signal is used to activate the first SSB, a transmission occasion of the first signal includes at least one of the following: (1) a number of random accesses on a PRACH associated with the second SSB or a number of random access response message reception failures reaches a fifth threshold; (2) signal strength or quality of the second SSB does not satisfy a third condition; (3) a number of transmission attempts on a PRACH resource associated with the second SSB reaches a sixth threshold, and transmission fails; (4) a two-step random access is attempted on a PRACH resource associated with the second SSB, and the access still fails after falling back to a four-step random access; (5) a number of transmissions of the first signal is less than or not greater than a seventh threshold; (6) a TA for transmitting the first signal is valid; (7) the first signal is repeatedly transmitted, and a time interval from last transmission is greater than or not less than an eighth threshold; (8) a power of a PRACH signal transmitted on a PRACH resource associated with the second SSB is greater than or not less than a ninth threshold; (9) an identifier of a preamble in a received RAR message is different from an identifier of a preamble sent on a PRACH resource associated with the second SSB; (10) an identifier of a preamble in a received RAR message is different from an identifier of a preamble sent on a PRACH resource associated with the second SSB, and a number of receptions of the RAR message in a second time range is greater than or not less than a tenth threshold; (11) a second signal has been transmitted, where the second signal is used to activate a signal associated with the first SSB; (12) an on demand signal is detected; (13) a time interval between a transmission time of a deactivation signal used to deactivate the first SSB and a current moment is greater than or not less than an eleventh threshold; and (14) duration from a moment at which activation of the first SSB starts to take effect reaches a twelfth threshold, where the second SSB includes the normal SSB.

Optionally, in an embodiment, in a case that the first signal is used to deactivate the first SSB, a transmission occasion of the first signal includes at least one of the following: (1) a number of random accesses on a PRACH associated with the second SSB or a number of random access response message reception failures does not reach a fifth threshold; (2) signal strength or quality of the second SSB satisfies a third condition; (3) a number of transmission attempts on a PRACH resource associated with the second SSB does not reach a sixth threshold; (4) a two-step random access is attempted without falling back to a four-step random access; (5) a number of transmissions of the first signal is less than or not greater than a seventh threshold; (6) a TA for transmitting the first signal is valid; (7) the first signal is retransmitted, and a time interval from last transmission is greater than or not less than an eighth threshold; (8) a power of a PRACH signal transmitted on a PRACH resource associated with the second SSB is less than or not greater than a ninth threshold; (9) an identifier of a preamble in a received RAR message is the same as an identifier of a preamble sent on a PRACH resource associated with the second SSB; (10) an identifier of a preamble in a received RAR message is different from an identifier of a preamble sent on a PRACH resource associated with the second SSB, and a number of receptions of the RAR message in a second time range is less than or not greater than a tenth threshold; (11) a third signal is not transmitted or a condition for transmitting a third signal is not satisfied, where the third signal is used to activate an on demand signal associated with the first SSB; (12) a condition for deactivating an on demand signal is satisfied; (13) an on demand signal is not detected; and (14) a time interval between a transmission time of an activation signal used to activate the first SSB and a current moment is greater than or not less than an eleventh threshold, where the second SSB includes the normal SSB.

Optionally, in an embodiment, the first signal includes an activation signal or a deactivation signal, the activation signal is used to activate the first SSB, the deactivation signal is used to deactivate the first SSB, and the activation signal and the deactivation signal are distinguished by using at least one of the following: (1) different time resources in a same signal configuration; (2) different frequency domain resources in a same signal configuration; (3) different space resources in a same signal configuration; (4) different signal sequences in a same signal configuration; and (5) different signal configurations.

Optionally, in an embodiment, the first SSB includes an on demand SSB.

For the apparatus 400 in this embodiment of this application, refer to the procedure corresponding to the method 200 in this embodiment of this application. In addition, units/modules in the apparatus 400 and other operations and/or functions described above are separately intended to implement a corresponding procedure in the method 200, and a same or equivalent technical effect can be achieved. For brevity, details are not described herein again.

The SSB activation or deactivation apparatus in this embodiment of this application may be an electronic device, for example, an electronic device with an operating system, or may be a component such as an integrated circuit or a chip in an electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

FIG. 5 is a schematic diagram of a structure of an SSB activation or deactivation apparatus according to an embodiment of this application. The apparatus may correspond to a network-side device in another embodiment. As shown in FIG. 5, the apparatus 500 includes the following module:
a reception module 502, configured to receive a first signal, where the first signal is used to activate or deactivate a first SSB.

Optionally, the apparatus 500 further includes a transmission module, a processing module, and the like.

In this embodiment of this application, the apparatus 500 receives the first signal, and the first signal is used to activate or deactivate the first SSB. In this embodiment of this application, a terminal may transmit a signal used to activate an SSB in a case that the SSB is needed, and transmit a signal used to deactivate the SSB in a case that the SSB is not needed, thereby improving flexibility of transmitting the SSB and helping improve resource utilization.

Optionally, in an embodiment, the first signal supports repetition reception, and a condition for repetition reception of the first signal by the reception module 502 includes at least one of the following: (1) a number of receptions of the first signal does not reach a maximum number of receptions; (2) a reception time of the first signal is in a reception time window or during running of a timer, where the reception time window and the timer are used to receive the first signal; and (3) the apparatus 500 does not transmit a feedback signal in a transmission time window of the feedback signal, where the feedback signal is configured to indicate whether the first signal is successfully received.

Optionally, in an embodiment, the first signal is associated with the feedback signal, and the feedback signal is configured to indicate whether the first signal is successfully received; or the first signal is associated with a beam of the first SSB; or beams used for transmitting the first signal a plurality of times are the same or different.

Optionally, in an embodiment, the apparatus 500 further includes a transmission module, configured to transmit a feedback signal, where the feedback signal is configured to indicate whether the first signal is successfully received. The feedback signal includes at least one of the following: a specific SSB, a response message of the first signal, and physical layer signaling.

Optionally, in an embodiment, the first signal includes an activation signal or a deactivation signal, the activation signal is used to activate the first SSB, the deactivation signal is used to deactivate the first SSB, and the activation signal and the deactivation signal are distinguished by using at least one of the following: (1) different time resources in a same signal configuration; (2) different frequency domain resources in a same signal configuration; (3) different space resources in a same signal configuration; (4) different signal sequences in a same signal configuration; and (5) different signal configurations.

For the apparatus 500 in this embodiment of this application, refer to the procedure corresponding to the method 300 in this embodiment of this application. In addition, units/modules in the apparatus 500 and other operations and/or functions described above are separately intended to implement a corresponding procedure in the method 300, and a same or equivalent technical effect can be achieved. For brevity, details are not described herein again.

The SSB activation or deactivation apparatus provided in this embodiment of this application can implement the processes implemented in the method embodiments of FIG. 2 and FIG. 3, and achieve same technical effects. To avoid repetition, details are not described herein again.

Optionally, as shown in FIG. 6, an embodiment of this application further provides a communication device 600, including a processor 601 and a memory 602. A program or instructions that can be run on the processor 601 are stored in the memory 602. For example, if the communications device 600 is a terminal, when the program or the instructions are executed by the processor 601, each step of the SSB activation or deactivation method embodiment is implemented, and a same technical effect can be achieved. When the communication device 600 is a network-side device, the program or the instructions are executed by the processor 601 to implement the steps in the foregoing SSB activation or deactivation method embodiment, and a same technical effect can be achieved. To avoid repetition, details are not described herein again.

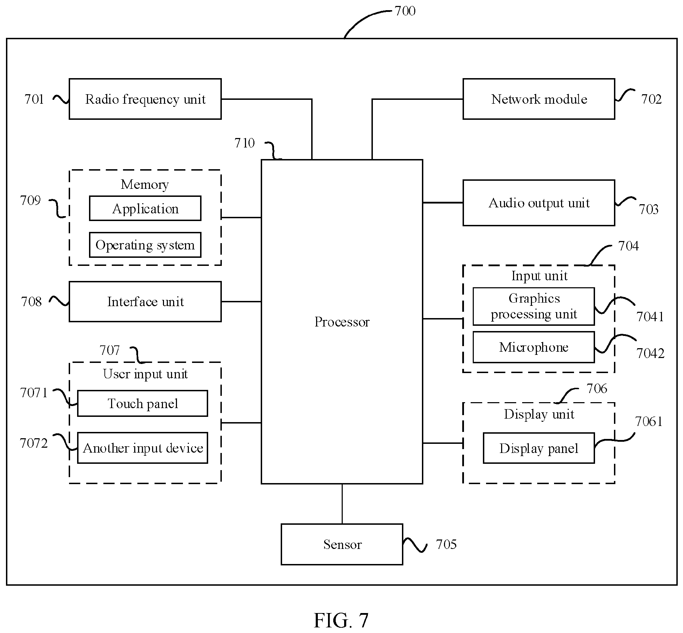

An embodiment of this application further provides a terminal, including a processor and a communication interface. The communication interface is configured to transmit a first signal, and the first signal is used to activate or deactivate a first SSB. The terminal embodiment corresponds to the foregoing terminal side method embodiment. Each implementation process and implementation of the foregoing method embodiment may be applied to the terminal embodiment, and same technical effects can be achieved. Specifically, FIG. 7 is a schematic diagram of a hardware structure of a terminal for implementing an embodiment of this application.

The terminal 700 includes but is not limited to at least some components in a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) that supplies power to each component. The power supply may be logically connected to the processor 710 by using a power management system, so as to implement functions such as charging management, discharging management, and power consumption management by using the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may transmit uplink data to the network-side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 may mainly include a first storage area for storing a program or instructions and a second storage area for storing data. The first storage area may store an operating system, an application or instructions required by at least one function (for example, a sound playback function or an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, the processor 710 integrates an application processor and a modem processor. The application processor mainly processes operations related to an operating system, a user interface, an application program, and the like. The modem processor, for example, a baseband processor, mainly processes a wireless communication signal. It may be understood that the foregoing modem processor may not be integrated into the processor 710.

The radio frequency unit 701 may be configured to transmit a first signal, where the first signal is used to activate or deactivate a first SSB.

In this embodiment of this application, a terminal transmits a first signal, and the first signal is used to activate or deactivate a first SSB. Therefore, the terminal may transmit a signal used to activate an SSB in a case that the SSB is needed, and transmit a signal used to deactivate the SSB in a case that the SSB is not needed, thereby improving flexibility of transmitting the SSB and helping improve resource utilization.

It may be understood that for implementation processes of the implementations mentioned in this embodiment, refer to related descriptions in the SSB activation or deactivation method embodiment, and a same or corresponding technical effect is achieved. To avoid repetition, details are not described herein again.

An embodiment of this application further provides a network-side device, including a processor and a communication interface. The communication interface is configured to receive a first signal, and the first signal is used to activate or deactivate a first SSB. The network-side device embodiment corresponds to the foregoing network-side device method embodiment. Each implementation process and implementation of the foregoing method embodiment may be applied to the network-side device embodiment, and a same technical effect can be achieved.

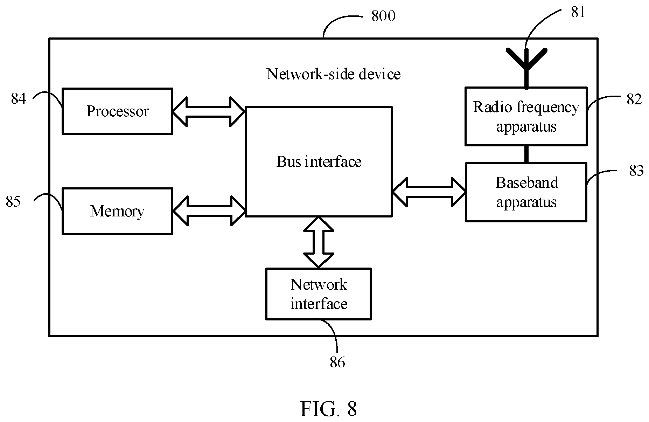

An embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the processed information to the radio frequency apparatus 82. After processing the received information, the radio frequency apparatus 82 sends the processed information by using the antenna 81.

The method performed by a network-side device in the foregoing embodiment may be implemented in the baseband apparatus 83. The baseband apparatus 83 includes a baseband processor.

For example, the baseband apparatus 83 may include at least one baseband board. A plurality of chips are disposed on the baseband board. As shown in FIG. 8, one of the chips is, for example, the baseband processor, and is connected to the memory 85 by using a bus interface, to invoke a program in the memory 85 to perform an operation of a network device shown in the foregoing method embodiment.

The network-side device may further include a network interface 86, and the interface is, for example, a common public radio interface (Common Public Radio Interface, CPRI).

The network-side device 800 in this embodiment of this application further includes instructions or a program stored in the memory 85 and capable of running on the processor 84. The processor 84 invokes the instructions or the program in the memory 85 to perform the method performed by the modules shown in FIG. 5, and a same technical effect is achieved. To avoid repetition, details are not described herein again.

An embodiment of this application further provides a readable storage medium. The readable storage medium stores a program or instructions, the program or the instructions are executed by a processor to implement the processes in the foregoing SSB activation or deactivation method embodiment, and a same technical effect can be achieved. To avoid repetition, details are not described herein again.

The processor is a processor in the terminal described in the foregoing embodiments. The readable storage medium may be non-volatile, or may be non-transitory. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, the communication interface is coupled to the processor, the processor is configured to run a program or instructions to implement the processes in the foregoing SSB activation or deactivation method embodiment, and a same technical effect can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium, the computer program/program product is executed by at least one processor to implement the processes in the foregoing SSB activation or deactivation method embodiment, and a same technical effect can be achieved. To avoid repetition, details are not described herein again.

An embodiment of this application further provides an SSB activation or deactivation system, including a terminal and a network-side device. The terminal may be configured to perform the steps of the foregoing SSB activation or deactivation method, and the network-side device may be configured to perform the steps of the foregoing SSB activation or deactivation method.

It should be noted that in this specification, the term "include", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and may further include performing functions in a basically simultaneous manner or in a reverse order based on the functions involved. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network-side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An SSB activation or deactivation method, comprising:
transmitting, by a terminal, a first signal, wherein the first signal is used to activate or deactivate a first SSB.

2. The method according to claim 1, wherein the first signal supports repetition transmission, and a condition for repetition transmission of the first signal by the terminal comprises at least one of the following:
a number of transmissions of the first signal does not reach a maximum number of repetitions;
a transmission time of the first signal is in a transmission time window or during running of a timer, wherein the transmission time window and the timer are used to transmit the first signal;
a measurement quantity of the first SSB is less than or not greater than a first threshold, wherein the first signal is used to activate the first SSB;
a measurement quantity of the first SSB is greater than or not less than a first threshold, wherein the first signal is used to deactivate the first SSB; and
the terminal does not receive a feedback signal in a reception time window of the feedback signal, wherein the feedback signal is configured to indicate whether the first signal is successfully received.

3. The method according to claim 2, wherein
a start position of the reception time window is configured or predefined by a network; or
a length of the reception time window is related to at least one of the following: a length of a RAR time window; and a period of the first SSB.

4. The method according to any one of claims 1 to 3, wherein
the first signal is associated with a feedback signal, and the feedback signal is configured to indicate whether the first signal is successfully received; or
the first signal is associated with a beam of the first SSB; or
beams used for transmitting the first signal a plurality of times are the same or different.

5. The method according to claim 1, wherein after the transmitting, by a terminal, a first signal, the method further comprises:
receiving, by the terminal, a feedback signal, wherein the feedback signal is configured to indicate whether the first signal is successfully received, wherein
the feedback signal comprises at least one of the following: a specific SSB, a response message of the first signal, and physical layer signaling.

6. The method according to any one of claims 1 to 5, wherein the method further comprises at least one of the following:
preferentially selecting, by the terminal, the first SSB in a case that the first SSB is activated or takes effect;
preferentially selecting, by the terminal, the first SSB in a first time range;
preferentially selecting, by the terminal, a second SSB for PRACH resource selection during initial PRACH transmission, wherein the second SSB comprises a normal SSB; and
determining, by the terminal based on a measurement quantity of a reference signal associated with the first SSB, whether to preferentially select the first SSB.

7. The method according to claim 6, wherein
the first time range is configured or predefined by the network; or
the first time range comprises a PRACH configuration period or an SSB period.

8. The method according to claim 6, wherein the initial PRACH transmission comprises at least one of the following:
first PRACH transmission without power ramping;
first PRACH transmission without repeated transmission; and
first PRACH transmission in a plurality of times of repeated transmission.

9. The method according to any one of claims 1 to 8, wherein the method further comprises at least one of the following:
if a number of failures of PRACH transmission by the terminal on a PRACH resource associated with a first type of SSB is greater than or not less than a second threshold, switching, by the terminal, to select a second type of SSB for PRACH resource selection;
if a measurement quantity of a reference signal associated with a first type of SSB does not satisfy a first condition, switching, by the terminal, to select a second type of SSB;
if a measurement quantity of a first type of SSB does not satisfy a second condition, switching, by the terminal, to select a second type of SSB;
if a number of transmissions by the terminal on a PRACH resource associated with a first type of SSB reaches a third threshold, switching, by the terminal, to select a second type of SSB;
if PRACH transmission attempted by the terminal is always on a PRACH resource associated with a first type of SSB, switching, by the terminal, to select a second type of SSB; and
if a number of retransmissions of the first signal is greater than or not less than a fourth threshold, switching, by the terminal, to select a second type of SSB, wherein the first signal is used to activate the first SSB, wherein
the first type of SSB is the first SSB, and the second type of SSB is the second SSB; or
the first type of SSB is the second SSB, and the second type of SSB is the first SSB; and
the second SSB comprises a normal SSB.

10. The method according to claim 9, wherein that a measurement quantity of a first type of SSB does not satisfy a second condition comprises at least one of the following:
signal strength, signal quality, a signal strength function value, and a signal quality function value of the first type of SSB does not satisfy the second condition.

11. The method according to any one of claims 1 to 10, wherein the first signal is used to activate the first SSB, and the method further comprises: selecting, by the terminal, the first SSB on at least one of the following occasions:
after the terminal transmits the first signal;
after a first time interval after the terminal transmits the first signal;
after the terminal receives a feedback signal; and
after a second time interval after the terminal receives the feedback signal.

12. The method according to any one of claims 1 to 10, wherein the first signal is used to deactivate the first SSB, and the method further comprises: selecting, by the terminal, the first SSB on at least one of the following occasions:
before the terminal transmits the first signal;
before a first time point, wherein the first time point is after a third time interval after the terminal transmits the first signal;
before the terminal receives a feedback signal; and
before a second time point, wherein the second time point is after a fourth time interval after the terminal receives the feedback signal.

13. The method according to claim 11 or 12, wherein the feedback signal is configured to indicate that the first signal is successfully received.

14. The method according to any one of claims 1 to 13, wherein the method further comprises: determining, by the terminal, effective time of activation or deactivation of the first SSB based on at least one of the following:
a resource occupied by the first signal, and indication information carried in the first signal.

15. The method according to any one of claims 1 to 14, wherein in a case that the first signal is used to activate the first SSB, a transmission occasion of the first signal comprises at least one of the following:
a number of random accesses by the terminal on a PRACH associated with a second SSB or a number of random access response message reception failures reaches a fifth threshold;
signal strength or quality of the second SSB does not satisfy a third condition;
a number of transmission attempts by the terminal on a PRACH resource associated with the second SSB reaches a sixth threshold, and transmission fails;
the terminal attempts a two-step random access on a PRACH resource associated with the second SSB, and still fails to access after falling back to a four-step random access;
a number of transmissions of the first signal is less than or not greater than a seventh threshold;
a TA for transmitting the first signal is valid;
the first signal is repeatedly transmitted, and a time interval from last transmission is greater than or not less than an eighth threshold;
a power of a PRACH signal transmitted by the terminal on a PRACH resource associated with the second SSB is greater than or not less than a ninth threshold;
an identifier of a preamble in a RAR message received by the terminal is different from an identifier of a preamble sent by the terminal on a PRACH resource associated with the second SSB;
an identifier of a preamble in a RAR message received by the terminal is different from an identifier of a preamble sent by the terminal on a PRACH resource associated with the second SSB, and a number of receptions of the RAR message in a second time range is greater than or not less than a tenth threshold;
the terminal has transmitted a second signal, wherein the second signal is used to activate a signal associated with the first SSB;
the terminal detects an on demand signal;
a time interval between a transmission time of a deactivation signal used to deactivate the first SSB and a current moment is greater than or not less than an eleventh threshold; and
duration from a moment at which activation of the first SSB starts to take effect reaches a twelfth threshold, wherein
the second SSB comprises the normal SSB.

16. The method according to any one of claims 1 to 14, wherein in a case that the first signal is used to deactivate the first SSB, a transmission occasion of the first signal comprises at least one of the following:
a number of random accesses by the terminal on a PRACH associated with a second SSB or a number of random access response message reception failures does not reach a fifth threshold;
signal strength or quality of the second SSB satisfies a third condition;
a number of transmission attempts by the terminal on a PRACH resource associated with the second SSB does not reach a sixth threshold;
the terminal attempts a two-step random access, and does not fall back to a four-step random access;
a number of transmissions of the first signal is less than or not greater than a seventh threshold;
a TA for transmitting the first signal is valid;
the first signal is retransmitted, and a time interval from last transmission is greater than or not less than an eighth threshold;
a power of a PRACH signal transmitted by the terminal on a PRACH resource associated with the second SSB is less than or not greater than a ninth threshold;
an identifier of a preamble in a RAR message received by the terminal is the same as an identifier of a preamble sent by the terminal on a PRACH resource associated with the second SSB;
an identifier of a preamble in a RAR message received by the terminal is different from an identifier of a preamble sent by the terminal on a PRACH resource associated with the second SSB, and a number of receptions of the RAR message in a second time range is less than or not greater than a tenth threshold;
the terminal does not transmit a third signal or a condition for transmitting a third signal is not satisfied, wherein the third signal is used to activate an on demand signal associated with the first SSB;
a condition for deactivating an on demand signal is satisfied;
the terminal does not detect an on demand signal; and
a time interval between a transmission time of an activation signal used to activate the first SSB and a current moment is greater than or not less than an eleventh threshold, wherein
the second SSB comprises the normal SSB.

17. The method according to any one of claims 1 to 16, wherein the first signal comprises an activation signal or a deactivation signal, the activation signal is used to activate the first SSB, the deactivation signal is used to deactivate the first SSB, and the activation signal and the deactivation signal are distinguished by using at least one of the following:
different time resources in a same signal configuration;
different frequency domain resources in a same signal configuration;
different space resources in a same signal configuration;
different signal sequences in a same signal configuration; and
different signal configurations.

18. The method according to any one of claims 1 to 17, wherein the first SSB comprises an on demand SSB.

19. An SSB activation or deactivation method, comprising:
receiving, by a network-side device, a first signal, wherein the first signal is used to activate or deactivate a first SSB.

20. The method according to claim 19, wherein the first signal supports repetition reception, and a condition for repetition reception of the first signal by the network-side device comprises at least one of the following:
a number of receptions of the first signal does not reach a maximum number of receptions;
a reception time of the first signal is in a reception time window or during running of a timer, wherein the reception time window and the timer are used to receive the first signal; and
the network-side device does not transmit a feedback signal in a transmission time window of the feedback signal, wherein the feedback signal is configured to indicate whether the first signal is successfully received.

21. The method according to claim 19 or 20, wherein
the first signal is associated with the feedback signal, and the feedback signal is configured to indicate whether the first signal is successfully received; or
the first signal is associated with a beam of the first SSB; or
beams used for transmitting the first signal a plurality of times are the same or different.

22. The method according to claim 19, wherein after the receiving, by a network-side device, a first signal, the method further comprises:
transmitting, by the network-side device, a feedback signal, wherein the feedback signal is configured to indicate whether the first signal is successfully received, wherein
the feedback signal comprises at least one of the following: a specific SSB, a response message of the first signal, and physical layer signaling.

23. The method according to any one of claims 19 to 22, wherein the first signal comprises an activation signal or a deactivation signal, the activation signal is used to activate the first SSB, the deactivation signal is used to deactivate the first SSB, and the activation signal and the deactivation signal are distinguished by using at least one of the following:
different time resources in a same signal configuration;
different frequency domain resources in a same signal configuration;
different space resources in a same signal configuration;
different signal sequences in a same signal configuration; and
different signal configurations.

24. An SSB activation or deactivation apparatus, comprising:
a transmission module, configured to transmit a first signal, wherein the first signal is used to activate or deactivate a first SSB.

25. An SSB activation or deactivation apparatus, comprising:
a reception module, configured to receive a first signal, wherein the first signal is used to activate or deactivate a first SSB.

26. A terminal, comprising a processor and a memory, wherein the memory stores a program or instructions capable of running on the processor, and the program or the instructions are executed by the processor to implement the steps of the method according to any one of claims 1 to 18.

27. A network-side device, comprising a processor and a memory, wherein the memory stores a program or instructions capable of running on the processor, and the program or the instructions are executed by the processor to implement the steps of the method according to any one of claims 19 to 23.

28. A readable storage medium, wherein a program or instructions are stored in the readable storage medium, and the program or the instructions are executed by a processor to implement the steps of the method according to any one of claims 1 to 23.
